# FASCICULE DE BREVET EUROPEEN

(11) **EP 1 621 905 B1**
(45) Date de publication et mention de la délivrance du brevet: **10.09.2008**
(21) Numéro de dépôt: 05300618.5
(22) Date de dépôt: 25.07.2005
(51) Int. Cl.: G02B 6/38

(54) **Connecteur pour fibre optique**
Faseroptischer Stecker
Optical fibre connector

(30) Priorité: 26.07.2004 FR 0451650
(43) Date de publication de la demande: 01.02.2006
(73) Titulaire: Nexans, 75008 Paris (FR)
(72) Inventeur: Bareel, Baudoin, 1160, Bruxelles (BE); D'Hondt, Peter, 9280 Lebbeke (BE)
(74) Mandataire: Lenne, Laurence

(56) Documents cités:
- EP-A- 0 375 168
- EP-A- 0 392 555
- EP-A- 0 668 521
- WO-A-01/73338
- FR-A- 2 194 978
- US-A- 4 684 205
- US-A- 5 121 455
- US-A- 6 089 759

## Description

L'invention concerne un connecteur pour fibre optique.

Elle se rapporte plus précisément à un connecteur pour fibre optique comprenant une première pièce dite ferrule disposée dans un corps de connecteur et recevant la fibre optique dans un alésage longitudinal, cette ferrule étant soumise à un ressort de compression disposé sur une pièce la prolongeant dite contre-ferrule et pressé grâce à une pièce de fermeture solidarisée audit corps de connecteur.

Un tel agencement est décrit dans le document de brevet EP 0 864 887.

Selon ce document de l'art antérieur, ferrule et contre-ferrule sont constituées d'une seule pièce et la fibre optique est en général collée dans l'alésage de la ferrule, pour son blocage en position. Il est également connu de bloquer en position la fibre optique par sertissage sur la ferrule.

Ces moyens de blocage de la fibre optique pose les problèmes techniques suivants.

Dans le cas d'un collage, un certain laps de temps est nécessaire pour le séchage de la colle, qu'il s'agisse d'un durcissement de la colle grâce à un four ou d'un durcissement chimique par additif.

Dans le cas d'un sertissage, il est nécessaire qu'un opérateur équipé d'une pince de sertissage réalise cette opération relativement précise.

Dans les deux cas, le montage nécessite du matériel complémentaire de montage, par exemple colle, four ou pince et le montage de la fibre optique dans le connecteur s'avère relativement complexe et délicat.

Par ailleurs, ce blocage par colle ou sertissage est définitif et n'est en aucun cas amovible ; une fois ainsi bloquée dans la ferrule, la fibre optique ne peut être débloquée et retirée du connecteur.

Par ailleurs, le document de brevet EP 0 668 521 décrit un connecteur pour fibre optique comprenant :
- un corps de connecteur,
- une ferrule disposée dans ce corps de connecteur et recevant la fibre optique dans un alésage longitudinal,
- une contre-ferrule se trouvant dans le prolongement de la ferrule, ferrule et contre-ferrule étant constituées de deux pièces séparées et
- un ressort de compression disposé sur ladite contre-ferrule.

Un élément de blocage de la fibre optique est inséré entre la ferrule et la contre-ferrule, le blocage ou le déblocage de cet élément nécessite le montage ou le démontage d'une pièce de fermeture solidarisée au corps de connecteur et comprimant le ressort.

L'invention, résout ces problèmes techniques et, pour ce faire, elle propose un connecteur pour fibre optique comme défini dans la revendication 1.

Il est ainsi obtenu un connecteur prêt au montage de la fibre optique, sans nécessité d'opérations délicates ni de matériel spécifique complémentaire.

Contrairement à certains dispositifs consistant en un joint mécanique entre un morceau de fibre préalablement collé et poli dans la ferrule et la fibre du câble à connecter qui présente le désavantage d'une jonction additionnelle et donc d'une atténuation supplémentaire, l'invention présente l'avantage d'une fixation mécanique de la fibre sans apporter d'atténuation supplémentaire par un joint mécanique à l'intérieur du connecteur.

L'appellation fibre optique est ici utilisée dans son sens large. Il peut s'agir d'une fibre optique nue ou gainée. Ce peut être une fibre de verre ou une fibre polymère.

De plus, grâce à l'invention, il est possible de débloquer la fibre optique sans démontage complexe du connecteur.

De préférence, ledit élément de blocage opère par pression sur la fibre optique.

Avantageusement, lesdites deux pièces séparées sont constituées d'une ferrule constituée d'une pièce cylindrique à bride annulaire d'extrémité et d'une contre-ferrule constituée d'une pièce cylindrique à bride annulaire d'extrémité tournée vers celle de la ferrule

Selon une première variante, ledit élément de blocage est constitué d'un manchon cylindrique de matière élastique inséré dans une cavité cylindrique de la ferrule et destiné à être pressé par ladite bride annulaire de la contre-ferrule.

Selon une seconde variante, ledit élément de blocage est constitué de deux demi-manchons tronconiques insérés dans une cavité conique de la ferrule et destinés à être pressés par ladite bride annulaire de la contre-ferrule.

Avantageusement, ledit agencement de retenue est constitué d'une pièce de clipsage venant en prise de façon amovible dans une rainure agencée sur la contre-ferrule.

Avantageusement, ladite pièce de clipsage est constituée d'une lame symétrique comportant une bague de clipsage centrale entourée de deux branches de préhension.

L'invention est décrite ci-après plus en détail à l'aide de figures ne représentant que des modes de réalisation préférés de l'invention.
La figure 1 est une vue en perspective éclatée d'un connecteur conforme à l'invention, selon un premier mode de réalisation.
La figure 2 est une vue en perspective éclatée d'un connecteur conforme à l'invention, selon un second mode de réalisation.
La figure 3 est une vue en perspective d'un connecteur conforme à l'invention, la fibre optique étant en position bloquée.
La figure 4 est une vue en coupe longitudinale du connecteur représenté sur la figure 3, selon le premier mode de réalisation.
La figure 5 est une vue en coupe longitudinale du même connecteur, la fibre optique étant en position débloquée.
La figure 6 est une vue en coupe longitudinale du connecteur représenté sur la figure 3, selon le second mode de réalisation.
La figure 7 est une vue en coupe longitudinale du même connecteur, la fibre optique étant en position débloquée.

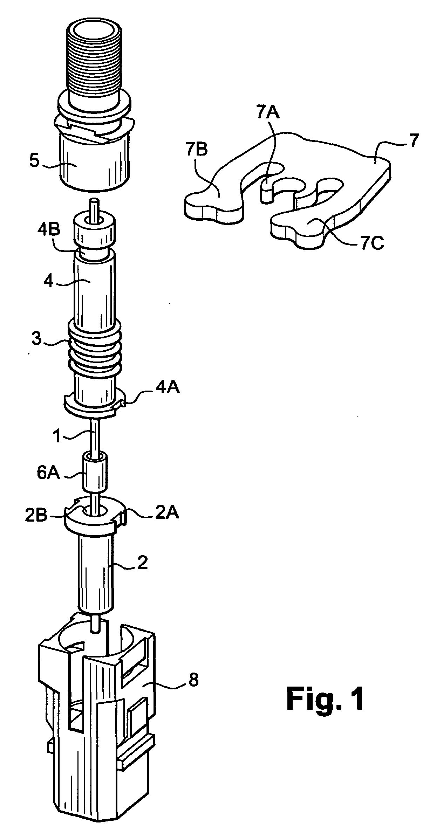

Un connecteur selon un premier mode de réalisation est représenté en vue en perspective éclatée sur la figure 1, permettant la visualisation de ces différentes pièces constitutives du connecteur.

Ce connecteur préassemblé pour fibre optique comprend une ferrule 2, par exemple en matière céramique ou métallique, disposée dans un corps 8 de connecteur, par exemple en matière plastique, et recevant la fibre optique 1 dans un alésage longitudinal. Cette ferrule 2 est soumise à un ressort de compression 3 disposé sur une pièce la prolongeant dite contre-ferrule 4, par exemple en matière plastique ou métallique, et pressé grâce à une pièce de fermeture 5, par exemple en matière métallique, solidarisée audit corps de connecteur.

Ferrule 2 et contre-ferrule 4 sont constituées de deux pièces séparées et un élément de blocage 6A de la fibre optique est inséré entre ces deux pièces séparées, cet élément de blocage pouvant être bloqué de l'extérieur du connecteur assemblé comme il sera explicité plus loin.

La fonction première et connue du ressort de compression 3 dans ce type de connecteur est de solliciter la ferrule de telle sorte que, lorsque deux ferrules de deux connecteurs sont aboutées, elles viennent en contact avec une sollicitation élastique de poussée.

Très avantageusement, selon l'invention, l'élément de blocage est actif sous l'action de ce même ressort de compression 3.

Ces deux pièces séparées sont constituées plus précisément d'une ferrule 2 constituée d'une pièce cylindrique à bride annulaire 2A d'extrémité et d'une contre-ferrule 4 constituée d'une pièce cylindrique à bride annulaire 4A d'extrémité tournée vers celle de la ferrule 2.

L'élément de blocage 6A opère par pression de la fibre optique 1.

Selon ce premier mode de réalisation, cet élément de blocage est constitué d'un manchon cylindrique 6A de matière élastique, avantageusement en élastomère, inséré dans une cavité cylindrique 2B de la ferrule et destiné à être pressé par la bride annulaire 4A de la contre-ferrule.

Le diamètre de cette cavité 2B est sensiblement égale au diamètre du manchon et sa profondeur est inférieure à la longueur du manchon.

Le connecteur comporte également une pièce de clipsage 7 destiné à venir en prise de façon amovible dans une rainure 4B agencée sur la contre-ferrule 4. Cette pièce de clipsage 7 est constituée d'une lame symétrique comportant une bague de clipsage centrale 7A entourée de deux branches de préhension 7B, 7C.

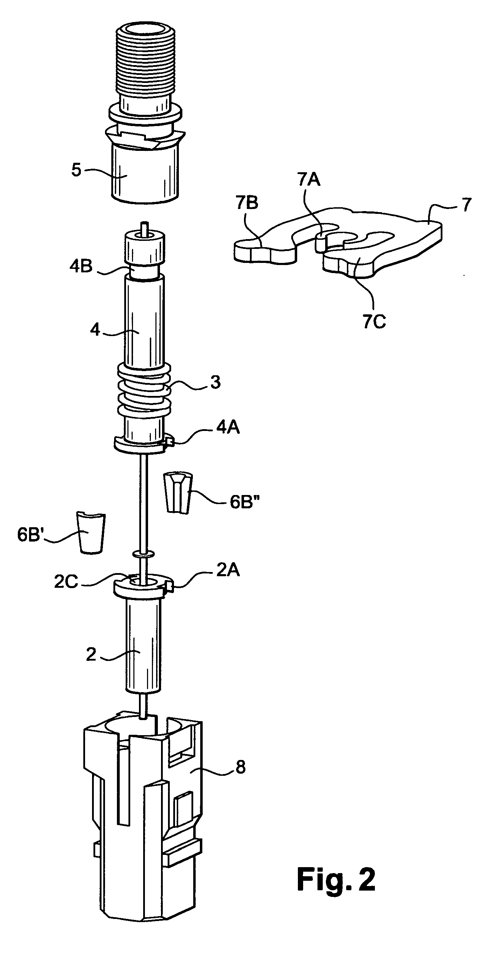

Un connecteur selon un second mode de réalisation est représenté en vue en perspective éclatée sur la figure 2, les pièces identiques au premier mode de réalisation étant référencées de façon identique.

Cet autre mode de réalisation se diffère par une constitution différente de l'élément de blocage de la fibre optique 1. II est constitué ici de deux demi-manchons tronconiques 6B', 6B", de préférence en matière plastique tel que l'ABS, insérés autour de la fibre optique 1 dans une cavité conique 2C de la ferrule et destinés à être pressés par la bride annulaire 4A de la contre-ferrule.

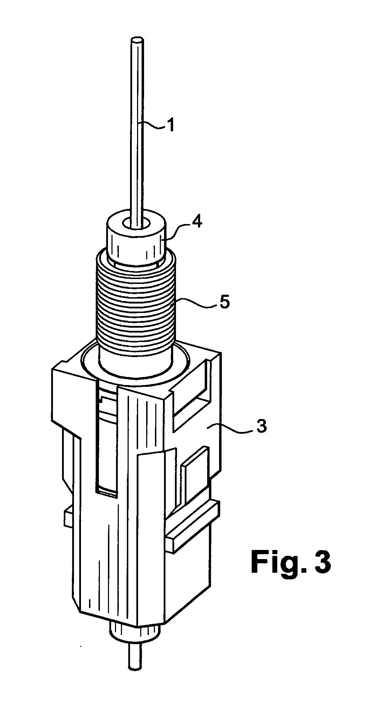

La figure 3 représente en perspective un connecteur conforme à l'invention, une fois les pièces constitutives assemblées et la fibre optique étant en position bloquée.

Le montage et le positionnement respectif des pièces sera explicité relativement aux figures suivantes. La ferrule 2, l'élément de blocage 6, une partie de la contre-ferrule 4 et une partie de la pièce de fermeture 3 sont contenus et maintenus dans le corps 8 de connecteur.

Ce montage est maintenant explicité en référence aux figures en coupe longitudinale suivantes.

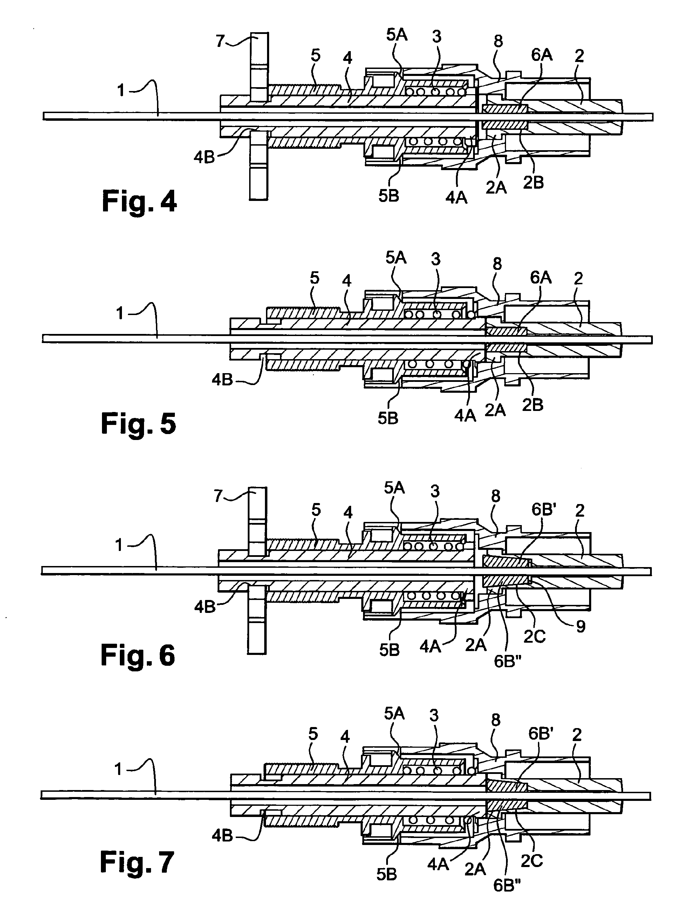

Sur la figure 4 illustrant le premier mode de réalisation et sur la figure 6 illustrant le second mode de réalisation, le connecteur est en position débloquée de la fibre optique 1.

II est à noter qu'en général, bien qu'ici représenté horizontalement, les pièces constitutives sont en pratique assemblées verticalement, c'est-à-dire telles que représentées sur les figures 1 et 2. Leur mise en place dans le corps 8 de connecteur est ainsi facilitée par la gravité.

Dans le corps 8 du connecteur est insérée la ferrule 2 bloquée en rotation par un agencement de rainure et nervure au niveau de sa bride annulaire 2A. Dans sa cavité cylindrique droite 2B ou conique 2C, est mis en place l'élément de blocage 6 constitué du manchon cylindrique 6A ou des deux demi-éléments tronconiques 6B', 6B". La contre-ferrule 4 équipée du ressort 3 est mise en place dans le corps 8 de connecteur, également bloquée en rotation par un agencement de rainure et nervure au niveau de sa bride annulaire 4B. La pièce de fermeture 5 vient presser en compression le ressort 3 et est solidarisée par clipsage 5A, 5B sur le corps 8 du connecteur, tout en permettant le passage de la contre-ferrule 4 par son extrémité externe.

Sur les figures 4 et 6, la fibre 1 qui traverse un orifice longitudinal de la ferrule 2 et de la contre-ferrule 4 n'est pas encore bloquée en position.

Pour ce faire, la pièce de clipsage 7 a la fonction d'un agencement de retenue amovible de la contre-ferrule 4 à l'extérieur de la pièce de fermeture 5 à l'encontre de l'effort du ressort 3 et est clipsée dans la rainure 4B de la contre-ferrule. Cette rainure 4B est disposée de telle sorte que dans cette position, les brides annulaires d'extrémité 2A, 4A de la ferrule et de la contre-ferrule sont distantes. Le manchon cylindrique 6A ou les demi-éléments 6B', 6B" sont donc uniquement posés dans la cavité correspondante 2B, 2C sans effet sur la fibre 1.

Par enlèvement et déclipsage de la pièce de clipsage 7, facilité par ses parties de préhension ou de poussée 7B, 7C, comme représenté sur la figure 5 relative au premier mode de réalisation, la contre-ferrule 4 est libérée, soumise à l'effet du ressort 3 et est déplacée et poussée en direction de la ferrule 2, contre le manchon cylindrique 6A qui de par son élasticité se comprime dans la cavité correspondante et vient serrer la fibre optique 1 par déformation, jusqu'à butée de la bride annulaire 4A de la contre-ferrule contre la bride annulaire 2A de la ferrule. La fibre optique 1 est alors bloquée et le connecteur est en position de fonctionnement, comme représenté sur la figure 3.

De même, par enlèvement et déclipsage de la pièce de clipsage 7, facilité par ses parties de préhension ou de poussée 7B, 7C, comme représenté sur la figure 7 relative au second mode de réalisation, la contre-ferrule 4 est libérée, soumise à l'effet du ressort 3 et est déplacée et poussée en direction de la ferrule 2, contre les demi-éléments tronconiques 6B', 6B" qui de par leur forme conique à effet de coin sont insérés dans la cavité conique 2C correspondante et viennent serrer la fibre optique 1, jusqu'à butée de la bride annuaire 4A de la contre-ferrule contre la bride annulaire 2A de la ferrule. La fibre optique 1 est alors bloquée et le connecteur est en position de fonctionnement, comme représenté sur la figure 3.

La fibre optique est donc mise en place dans le connecteur par une opération particulièrement simple, sans nécessité de matériel complémentaire spécifique.

Outre ce montage particulièrement facilité, il est à noter une autre caractéristique importante de l'invention. L'invention permet également aisément le démontage et le déblocage de la fibre optique 1 à partir de l'extérieur du connecteur, sans intervention spécifique sur le connecteur assemblé.

En effet, le connecteur étant monté comme représenté sur les figures 3, 5 et 7, la rainure 4B de la contre-ferrule est en partie externe et peut servir de point de préhension soit manuellement soit par un outil, pour tirer la contre-ferrule 4 vers l'extérieur à l'encontre de l'effort du ressort 3. La pièce de clipsage 7 peut alors être clipsé sur cette rainure et la fibre optique est débloquée par libération soit du manchon cylindrique 6A soit des demi-éléments tronconiques 6B', 6B".

Dans le cas du second mode de réalisation, comme visible sur la figure 6, une bague élastique, de préférence en élastomère 9, est de préférence insérée au fond de la cavité conique 2C de la ferrule pour faciliter la sortie des demi-éléments tronconiques 6B', 6B" hors de la cavité conique 2C par expansion élastique de cette bague.

Les modes de réalisation décrits ci-dessus et illustrés se réfèrent au connecteur couramment dénommé SC. Il est bien entendu que l'invention peut également être appliquée à tous les autres types de connecteurs pour fibre optique, en particulier les connecteurs plus connus sous les dénominations LC, MTRJ, ST et FC.

## Revendications

1. Connecteur pour fibre optique comprenant :
- un corps (8) de connecteur ;
- une ferrule (2) disposée dans ledit corps (8) de connecteur et recevant la fibre optique (1) dans un alésage longitudinal ;
- une contre-ferrule (4) se trouvant dans le prolongement de ladite ferrule (2), en amont du dit connecteur optique, ferrule (2) et contre-ferrule (4) étant constituées de deux pièces séparées ;
- un ressort de compression (3) disposé sur ladite contre-ferrule (4) et s'appuyant sur l'extrémité avale de celle-ci;
- une pièce de fermeture (5) solidarisé audit corps (8) de connecteur arrangée de façon à comprimer ledit ressort (3) contre l'extrémité avale de la contre-ferrule (4) et, de ce fait, à presser la contre-ferrule (4) contre ladite ferrule (3) en direction du dit connecteur optique et de façon à laisser l'extrémité amont de la contre-ferrule (4) accessible de l'extérieur du connecteur ;
- un élément de blocage (6) de la fibre optique inséré entre ladite ferrule et ladite contre-ferrule permettant de bloquer la fibre optique (1) dans l'alésage de la ferrule (2) ;
le connecteur comprenant également un agencement de retenue amovible (7) de la contre-ferrule à l'extérieur de ladite pièce de fermeture (5) arrangé de manière à pouvoir retenir la contre-ferrule dans une position allant à l'encontre de l'effort dudit ressort (3), ledit agencement assurant le blocage ou le déblocage du dit élément de blocage (6) à partir de l'extérieur du connecteur.

2. Connecteur selon la revendication 1, **caractérisé en ce que** ledit élément de blocage est tel qu'il devient actif sous l'action du dit ressort de compression (3).

3. Connecteur selon l'une des revendications précédentes, **caractérisé en ce que** ledit élément de blocage (6) est tel qu'il opère par pression sur la fibre optique (1).

4. Connecteur selon l'une des revendications précédentes, **caractérisé en ce que** lesdites deux pièces séparées sont constituées d'une ferrule (2) constituée d'une pièce cylindrique à bride annulaire (2A) d'extrémité et d'une contre-ferrule (4) constituée d'une pièce cylindrique à bride annulaire (4A) d'extrémité tournée vers celle de la ferrule (2).

5. Connecteur selon la revendication 3, **caractérisé en ce que** ledit élément de blocage est constitué d'un manchon cylindrique (6A) de matière élastique inséré dans une cavité cylindrique (2B) de la ferrule et destiné à être pressé par ladite bride annulaire (4A) de la contre-ferrule.

6. Connecteur selon la revendication 3, **caractérisé en ce que** ledit élément de blocage est constitué de deux demi-manchons tronconiques (6B', 6B") insérés dans une cavité conique (2C) de la ferrule et destinés à être pressés par ladite bride annulaire (4A) de la contre-ferrule.

7. Connecteur selon l'une des revendications précédentes, **caractérisé en ce que** ledit agencement de retenue est constitué d'une pièce de clipsage (7) venant en prise de façon amovible dans une rainure (4B) agencée sur la contre-ferrule.

8. Connecteur selon la revendication précédente, **caractérisé en ce que** ladite pièce de clipsage (7) est constituée d'une lame symétrique comportant une bague de clipsage centrale (7A) entourée de deux branches de préhension (7B, 7C).

## Claims

1. A connector for optical fiber comprising:
- a connector body (8);
- a ferrule (2) positioned in said connector body (8) and receiving the optical fiber (1) in a longitudinal bore
- a counter-ferrule (4) which is in the extension of said ferrule (2), upstream from said optical connector, the ferrule (2) and counter-ferrule (4) consisting of two separate parts;
- a compression string (3) positioned on said counter-ferrule (4) and supported on the downstream end of the latter;
- a closure part (5) integral with said connector body (8) positioned so as to compress said spring (3) against the downstream end of the counter-ferrule (4) and consequently press the counter-ferrule (4) against said ferrule (3) in the direction of said optical connector and so as to leave the upstream end of the counter-ferrule (4) accessible from the outside of the connector;
- a component (6) for blocking the optical fiber inserted between said ferrule and said counter-ferrule allowing the optical fiber (1) to be blocked in the bore of the ferrule (2);
the connector also comprising a removable arrangement (7) for retaining the counter-ferrule outside said closure part (5) positioned so as to be able to retain the counter-ferrule in a position acting against the force of said spring (3), said arrangement providing blocking or unblocking of said blocking component (6) from the outside of the connector.

2. The connector according to claim 1, **characterized in that** said blocking component is such that it becomes active under the action of said compression spring (3).

3. The connector according to any of the preceding claims, **characterized in that** said blocking component (6) is such that it operates by pressing on the optical fiber (1).

4. The connector according to any of the preceding claims, **characterized in that** both said separate parts consist of a ferrule (2) consisting of a cylindrical part with an end annular flange (2A) and of a counter-ferrule (4) consisting of a cylindrical part with an end annular flange (4A) turned towards that of the ferrule (2).

5. The connector according to claim 3, **characterized in that** said blocking component consists of a cylindrical sleeve (6A) of elastic material, inserted in a cylindrical cavity (2B) of the ferrule and intended to be pressed by said annular flange (4A) of the counter-ferrule.

6. The connector according to claim 3, **characterized in that** said blocking component consists of frustro-conical half-sleeves (6B', 6B") inserted in a conical cavity (2C) of the ferrule and intended to be pressed by said annular flange (4A) of the counter-ferrule.

7. The connector according to any of the preceding claims, **characterized in that** said retaining arrangement consists of a clip-on part (7) which removably engages into a groove (4B) provided on the counter-ferrule.

8. The connector according to the preceding claim, **characterized in that** said clip-on part (7) consists of a symmetrical strip including a central clip-on ring (7A) surrounded by two grip branches (7B, 7C).

## Patentansprüche

1. Verbinder für Lichtwellenleiter, umfassend:
- einen Verbinderkörper (8),
- eine im Verbinderkörper (8) angeordnete Druckhülse (2), die den Lichtwellenleiter (1) in einer Längsbohrung aufnimmt,
- eine Gegen-Druckhülse (4), die sich in Verlängerung der Druckhülse (2) stromaufwärts des Lichtwellenleiters befindet, wobei die Druckhülse (2) und die Gegen-Druckhülse (4) von zwei separaten Teilen gebildet werden,
- eine Kompressionsfeder (3), die auf der Gegen-Druckhülse (4) angeordnet ist und sich auf ihrem stromabwärtigen Ende abstützt,
- ein Verschlussteil (5), das mit dem Verbinderkörper (8) verbunden ist und derart ausgebildet, dass die Feder (3) gegen das stromabwärtige Ende der Gegen-Druckhülse (4) komprimiert wird, wodurch die Gegen-Druckhülse (4) gegen die Druckhülse (3) in Richtung des Lichtwellenleiters gepresst wird, derart, dass das stromaufwärtige Ende der Gegen-Druckhülse (4) für das Ende des Lichtwellenleiters zugänglich bleibt,
- ein Arretierelement (6) des Lichtwellenleiters zwischen der Druckhülse und der Gegen-Druckhülse, welches erlaubt, den Lichtwellenleiter (1) in der Bohrung der Druckhülse (2) zu blockieren,
wobei der Lichtwellenleiter ebenfalls eine lösbare Rückhalteanordnung (7) der Gegen-Druckhülse außerhalb des Verschlussteils (5) umfasst, das derart ausgebildet ist, dass die Gegen-Druckhülse in einer Stellung zurückgehalten wird, die gegen die Beanspruchung der Feder (3) läuft, wobei die Anordnung das Arretieren oder Entsperren des Arretierelements (6) von außerhalb des Leiters gewährleistet.

2. Verbinder nach Anspruch 1, **dadurch gekennzeichnet, dass** das Arretierelement derart ausgebildet ist, dass es unter Einwirkung der Kompressionsfeder (3) aktiv wird.

3. Verbinder nach einem der vorangehenden Ansprüche, **dadurch gekennzeichnet, dass** das Arretierelement (6) derart ausgebildet ist, dass es durch Druck auf den Lichtwellenleiter (1) wirkt.

4. Verbinder nach einem der vorangehenden Ansprüche, **dadurch gekennzeichnet, dass** die zwei separaten Teile von einer Druckhülse (2) gebildet werden, die von einem zylindrischen Teil im Ringflansch (4A) am Ende gebildet wird, und einer Gegen-Druckhülse (4), die von einem zylindrischen Teil (4A) mit einem Ende, das gegen das der Druckhülse (2) gerichtet ist, gebildet wird.

5. Verbinder nach Anspruch 3, **dadurch gekennzeichnet, dass** das Arretierelement von einer zylindrischen Muffe (6A) aus einem elastischen Material gebildet wird, das in eine zylindrische Aufnahme (2B) der Druckhülse eingeführt wird und dazu bestimmt ist, vom Ringflansch (4A) der Gegen-Druckhülse gepresst zu werden.

6. Verbinder nach Anspruch 3, **dadurch gekennzeichnet, dass** das Arretierelement von zwei kegelstumpfförmigen Halbmuffen (6B', 6B'') gebildet wird, die in eine konische Aufnahme (2C) der Druckhülse eingeführt werden und dazu bestimmt sind, vom Ringflansch (4A) der Gegen-Druckhülse gepresst zu werden.

7. Verbinder nach einem der vorangehenden Ansprüche, **dadurch gekennzeichnet, dass** die Rückhaltevorrichtung von einem Klipsteil (7) gebildet wird, das lösbar in eine Nut (4B) eingreift, die auf der Gegen-Druckhülse ausgebildet ist.

8. Verbinder nach vorangehendem Anspruch, **dadurch gekennzeichnet, dass** das Klipsteil (7) von einem symmetrischen Plättchen gebildet wird, das einen mittigen Klipsring (7A), umgeben von zwei Greifarmen (7B, 7C), umfasst.
